# EUROPÄISCHE PATENTSCHRIFT

(11) **EP 0 598 176 B1**
(45) Veröffentlichungstag und Bekanntmachung des Hinweises auf die Patenterteilung: **20.03.1996**
(21) Anmeldenummer: 93106527.0
(22) Anmeldetag: 22.04.1993
(51) Int. Cl.: B23B 31/12

(54) **Bohrfutter**
Drilling chuck
Mandrin de perçage

(30) Priorität: 14.11.1992 DE 4238503
(43) Veröffentlichungstag der Anmeldung: 25.05.1994
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 017 748
- EP-A- 0 151 791
- EP-A- 0 302 992
- DE-A- 2 847 927
- DE-A- 3 426 808
- US-A- 5 044 643

## Beschreibung

Die Erfindung betrifft ein Bohrfutter, insbes. zum Schlag- und Hammerbohren, mit einem Futterkörper, einem daran verdrehbaren koaxialen Spannring, mit Spannbacken, die zum Spannen und Lösen des Bohrfutters durch eine Relativdrehung zwischen dem Spannring und dem Futterkörper verstellbar sind, und mit einer zwischen dem Futterkörper und dem Spannring wirksamen Rasteinrichtung aus einem zur Futterachse koaxialen Kranz von Rastausnehmungen auf Seiten des Spannrings und aus mindestens einem Rastglied, das einen federnd in die Rastausnehmungen greifenden Rastkopf trägt, wobei der Rastkopf und die ihn aufnehmenden Rastausnehmungen in Drehrichtung des Spannrings einander in derart geneigten Flankenflächen anliegen, daß diese beim Verdrehen des Spannrings von Hand oder mittels eines Spannschlüssels den Rastkopf aus den Rastausnehmungen herausdrücken, im übrigen aber den Rastkopf in den Rastausnehmungen halten.

Derartige Bohrfutter sind aus DE 34 16 986 A1 oder DE 34 26 808 A1 bekannt. Bei ihnen ist das Rastglied ein am Futterkörper axial oder radial verschiebbar, in Umfangsrichtung aber unverstellbar geführter Riegel, der unter der Kraft einer Rastfeder in die ihn aufnehmenden Rastausnehmungen am Spannring vorsteht, wodurch eine Momentenkupplung zwischen dem Futterkörper und dem Spannring gebildet wird, die ausrastet und den Spannring zur Verdrehung freigibt, sobald das am Spannring wirkende Drehmoment eine durch die Neigung der Flankenflächen und die Kraft der Rastfeder vorgebbare Größe überschreitet. Diese Größe ist so eingestellt, daß unerwünschte, durch die Schlagbeanspruchungen des Bohrfutters und seiner Teile angeregte selbsttätige Verdrehungen des Spannrings ausgeschlossen, beabsichtigte Verdrehungen von Hand oder mit Hilfe des Spannschlüssels aber jederzeit möglich sind. Durch die Sicherung des Spannrings gegen selbsttätiges Verdrehen während des Bohrbetriebs sind im Ergebnis über den Spannring auch die mit ihm im Eingriff stehenden Spannbacken unverstellbar gehalten, so daß sich der Durchmesser der zwischen den Spannbacken gebildeten Einspannöffnung für den Bohrerschaft nicht ändern kann.

Bohrfutter dieser Art haben sich in der Praxis vielfach bewährt, sind aber mit dem Nachteil behaftet, daß sich die Einspannung des Bohrers lockern oder sogar gänzlich lösen kann, wenn sich beim Schlag- oder Hammerbohren die Spannbacken in den Bohrerschaft eingraben. Von Nachteil ist außerdem, daß die Rasteinrichtung ständig wirksam ist, das Rastglied also auch dann mit dem Rastkopf in die Rastausnehmungen eingreift, wenn, beispielsweise bei einem Bohrerwechsel, das Bohrfutter auf einen anderen Spanndurchmesser eingestellt werden muß. In diesem Fall kann die Rasteinrichtung das leichte Verdrehen des Spannrings und die schnelle Umstellung des Bohrfutters behindern, weil der Spannring immer mindestens mit derjenigen Kraft verdreht werden muß, die zum Ausheben des Rastkopfes aus den Rastausnehmungen über die Flankenflächen erforderlich ist.

Der Erfindung liegt die Aufgabe zugrunde, ein Bohrfutter der eingangs genannten Art so auszubilden, daß zur Aufrechterhaltung der Bohrereinspannung ein selbsttätiges Nachstellen des Bohrfutters während dem Bohrbetrieb stattfinden und die Rasteinrichtung zum leichteren und schnelleren Verdrehen des Spannrings ausgeschaltet werden kann.

Diese Aufgabe wird nach der Erfindung dadurch gelöst, daß das Rastglied an einem Stellring angeordnet ist, der koaxial am Futterkörper drehbar gelagert und relativ zum Futterkörper in seinem Drehweg zwischen zwei Anschlägen begrenzt ist, daß eine zwischen dem Stellring und dem Futterkörper wirksame Nachstellfeder den Stellring in Bezug auf den Futterkörper in derselben Drehrichtung wie die des Spannrings beim Spannen des Bohrfutters beaufschlagt, wobei die Kraft der Nachstellfeder nicht ausreicht, den Rastkopf aus den Rastausnehmungen herauszudrücken, und daß durch Verdrehen des Stellrings in dieser Richtung bis zum Anschlag hin das Rastglied in einen Zustand verstellbar ist, in dem der Rastkopf ohne Möglichkeit zum Rasteingriff außerhalb der Rastausnehmungen steht.

Durch die erfindungsgemäße Anordnung des Rastgliedes am Stellring wird die Kraft der zwischen dem Stellring und dem Futterkörper vorgesehenen Nachstellfeder über das in eine der Rastausnehmungen eingerastete Rastglied auf den Spannring übertragen, der sich somit im Sinne eines weiteren Schließens des Bohrfutters nachstellt, wenn während des Bohrbetriebs sich die Spannbacken in den Bohrerschaft eindrücken und eingraben sollten. Somit kann sich die Einspannung des Bohrers nicht in unzulässiger Weise lockern. Für dieses Nachstellen des Bohrfutters steht fast der gesamte Drehweg des Stellrings zur Verfügung. Erst beim weiteren Verdrehen des Stellrings in dieser Richtung wird auf dem noch übrigen, am Anschlag endenden kurzen Rest des Drehweges die Rastfunktion der Rasteinrichtung unwirksam gemacht. Diese Ausschaltung der Rastfunktion ermöglicht es, den dann freien Spannring schnell und leicht zu verdrehen, wenn der Spanndurchmeser des Bohrfutters geändert werden soll, beispielsweise beim Wechseln von Bohrern mit verschiedenen Durchmessern des Bohrerschafts. Von besonderem Vorteil ist dabei, daß sich beim anschließenden Spannen des gewechselten Bohrers der Stellring selbsttätig wieder in eine die Rasteinrichtung und die Nachstellung wirksam werden lassende Lage zurückstellt, wozu es nur erforderlich ist, bei der entsprechenden Verdrehung des Spannrings das Bohrfutter am Stellring festzuhalten. Daher empfiehlt sich eine Ausführungsform des erfindungsgemäßen Bohrfutters, die eine Handhabung des Bohrfutters unmittelbar am Futterkörper erst gar nicht ermöglicht und dazu dadurch gekennzeichnet ist, daß der Spannring und der Stellring axial nebeneinander am Futterkörper angeordnet sind und gemeinsam den Futterkörper im wesentlichen seiner ganzen axialen Länge nach überdecken. Die Bedienung eines so gestalteten Bohrfutters ist dann nur noch am Spannring und am Stellring möglich und bedarf somit keiner besonderen Kenntnis oder Aufmerksamkeit mehr.

Eine hinsichtlich der Steuerung des Rastgliedes beim Verdrehen des Stellringes bevorzugte Ausführungsform ist dadurch gekennzeichnet, daß das Rastglied an einer relativ zum Futterkörper festen Stellkurve geführt ist, die beim Verdrehen des Stellrings das Rastglied zwischen seinen beiden Zuständen mit und ohne Eingriff des Rastkopfes in die Rastausnehmungen verstellt, wobei die Stellkurve zum Eingriff des Rastkopfes in die Rastausnehmungen einen vom Kranz der Rastausnehmungen im wesentlichen gleichbleibenden Abstand aufweisenden Kurvenabschnitt und daran anschließend für den eingriffsfreien Zustand eine schräge Rampe mit zum Drehwegende hin größer werdendem Abstand besitzt. Der im wesentlichen gleichen Abstand vom Kranz der Rastausnehmungen aufweisende Kurvenabschnitt der Stellkurve erstreckt sich in Umfangsrichtung mindestens über die Länge des gewünschten Nachstellweges. An diesem Kurvenabschnitt wird das Rastglied in den Rastausnehmungen im Eingriff gehalten, und zwar ungeachtet dessen, daß sich beim Nachstellen des Bohrfutters der Stellring und der Spannring gegenüber dem Futterkörper verdrehen. Erst an der schrägen Rampe ergibt sich der eingriffsfreie Zustand des Rastgliedes und damit die Möglichkeit, den Spannring unbehindert durch das Rastglied in der einen oder anderen Drehrichtung zu verdrehen. Im übrigen kann es sich empfehlen, daß die Stellkurve an dem an die Rampe anschließenden Ende des zum Eingriff des Rastkopfes in die Rastausnehmungen vorgesehenen Kurvenabschnitts einen das Rastglied in Verdrehungsrichtung des Stellrings haltenden Rastsitz bildet. Dieser Rastsitz verhindert, daß sich der Stellring mit dem Rastglied selbsttätig soweit verdrehen kann, daß das Rastglied auf die Rampe gelangt und der Rastkopf aus den Rastausnehmungen austritt, daß also dieser letztere Zustand vielmehr nur durch absichtliches Verdrehen des Stellrings von Hand über diesen Rastsitz hinaus eingestellt werden kann.

Eine besonders bevorzugte Ausführungsform des Rastgliedes ist im Rahmen der Erfindung dadurch gekennzeichnet, daß das Rastglied von einer Feder mit zwei in einem Knie gegeneinander abgewinkelten Federschenkeln gebildet ist, von welchen sich der eine im wesentlichen axial, der andere im wesentlichen in Umfangsrichtung erstreckt, und daß der axial gerichtete Federschenkel an dem vom Federknie wegliegenden Schenkelende den Rastkopf aufweist und mit dem Federknie an der Stellkurve geführt ist. Die Elastizität des den Rastkopf aufweisenden Federschenkels bildet die Federkraft für den Rasteingriff des Rastkopfes in die Rastausnehmungen am Spannring und ermöglicht es dem Rastkopf, bei der zum Spannen oder Lösen des Bohrfutters gegenseitigen Verdrehung von Spannring und Stellring an ersterem entlang über die Flankenflächen von Rastausnehmung zu Rastausnehmung zu rutschen. Zweckmäßigerweise liegt dann das Federknie der Stellkurve unter einer Federvorspannung des anderen, sich im wesentlichen in Umfangsrichtung erstreckenden Federschenkels an, wobei die Federvorspannung entgegengesetzt zur Eingriffsrichtung des Rastkopfes in die Rastausnehmungen gerichtet ist. Die Federvorspannung kann dann das Federknie an der Rampe abgleiten lassen, so daß sich der Stellring nicht selbsttätig aus der den Rasteingriff aufhebenden Stellung zurück in die den Rasteingriff herstellende Stellung verdrehen kann, vielmehr auch hierfür eine gezielte Verdrehung des Stellrings von Hand erforderlich ist.

Um durch die Federkräfte der Federschenkel möglicherweise verursachte Verlagerungen des Federknies auf der Stellkurve zu vermeiden, die zu Beeinträchtigungen des Rastvorgangs führen könnten, empfiehlt es sich, das Federknie am Stellring gegen Verstellungen in Umfangsrichtung abzustützen und in Eingriffsrichtung des Rastkopfes in die Rastausnehmungen verschiebbar zu führen. Durch diese Festlegung des Federknies in Umfangsrichtung am Stellring kann der sich im wesentlichen in dieser Richtung erstreckende Federschenkel an seinem dem Federknie abgewandten Ende mit dem einen Ende einer die Nachstellfeder bildenden Spiralfeder verbunden sein, deren anderes Ende am Futterkörper gehalten ist. Die das Rastglied bildende Feder und die die Nachstellfeder bildende Spiralfeder können dann zu einem einzigen Federelement integriert sein, was den konstruktiven Aufbau vereinfacht.

Eine andere, in konstruktiver Hinsicht einfachere und daher besonders bevorzugte Ausführungsform ist dadurch gekennzeichnet, daß das Rastglied von einem sich im wesentlichen in Axialrichtung des Bohrfutters erstreckenden, in radialer Richtung elastisch biegbaren Stab gebildet ist, der mit dem einen Ende am Stellring sitzt und am anderen, freien Ende den Rastkopf zum radialen Eingriff in die Rastausnehmungen trägt und dazwischen mit federnder Vorspannung an der Stellkurve anliegt, wobei die Federvorspannung entgegengesetzt zur Eingriffsrichtung des Rastkopfes in die Rastausnehmungen gerichtet ist. Hier liefert die elastische Biegespannung des Stabes die Federkraft für den Rasteingriff des Rastkopfes in die Rastausnehmungen. Die Stabbiegung erfolgt um so schwerer, die Federkraft für den Rasteingriff ist also um so größer, je näher am Rastkopf der Stab von der Stellkurve abgestützt wird. Am einfachsten und besten ist im übrigen der Stab einstückig mit dem Stellring ausgebildet. - In jedem Fall ist die radiale Eingriffsrichtung des Rastgliedes mit dem Vorteil verbunden, daß starke axiale Futterschwingungen und Schlagbeanspruchungen, wie sie beim Hammerbohren auftreten können, auf den radialen Rastkopfeingriff ohne nachteilige Folgen sind und nicht dazu führen können, daß der Rastkopf aus den Rastausnehmungen springt.

Die Rastglieder können zu mehreren vorgesehen und verteilt über den Futterumfang angeordnet sein. Sie können insbes. in gleicher Winkelteilung wie die Rastausnehmungen angeordnet sein, so daß alle Rastglieder gleichzeitig in die Rastausnehmungen eintreten. Im Sinne einer feineren Rastunterteilung ist es aber günstiger, die Rastglieder in einer Winkelteilung längs des Futterumfangs anzuordnen, die nach Art eines Nonius geringfügig größer oder kleiner als die der Rastausnehmungen am Spannring ist. Eine bevorzugte Ausführungsform der Erfindung ist daher dadurch gekennzeichnet, daß zumindest zwei Rastglieder längs des Futterumfangs in einer Winkelteilung angeordnet sind, bei der der Winkel zwischen diesen Rastgliedern gleich der Summe aus einem ganzzahligen Vielfachen des Winkelabstands zwischen aufeinander folgenden Rastausnehmungen und einem Differenzwinkel ist, der gleich dem letztgenannten Winkelabstand geteilt durch die Anzahl der Rastglieder ist.

Weiter empfiehlt es sich, die Anordnung so zu treffen, daß der Rastkopf radial von innen nach außen in die Rastausnehmungen eingreift. In dieser Ausführungsform kann er mit einem Fliehgewicht ausgestattet sein, so daß beim Bohren die Zentrifugalkraft des Fliehgewichtes einen besonders zuverlässigen Sitz des Rastkopfes in der Rastausnehmung bewirkt.

Eine vorteilhafte Ausführungsform des erfindungsgemäßen Bohrfutters ist dadurch gekennzeichnet, daß zur Ausbildung der die Verdrehung des Stellrings gegenüber dem Futterkörper begrenzenden Anschläge eines der Teile, Futterkörper oder Stellring, mindestens eine achsenparallele Planfläche aufweist, der am anderen Teil zwei achsenparallele und zueinander schräge Anschlagflächen gegenüber stehen, die durch ihre gegenseitige Schrägstellung den Winkel bestimmen, um den der Stellring gegenüber dem Futterkörper maximal verdrehbar ist.

Ein anderer, in konstruktiver Hinsicht besonders zweckmäßiger Vorschlag der Erfindung geht dahin, daß der Futterkörper mit radial abstehenden Nocken versehen ist, die in im Stellring ausgebildete Taschen greifen, die in Umfangsrichtung um den Verdrehungsweg größer als die Nocken sind und in denen die Nachstellfeder angeordnet ist, wobei die Anschläge zur Drehbegrenzung des Stellrings von den sich in Umfangsrichtung jeweils gegenüber liegenden Flächen der Nocken bzw. Taschen gebildet sind. Bei axialem Eingriff in die Rastausnehmungen kann das Rastglied in einer der Taschen angeordnet und die Stellkurve für das Rastglied an dem ihm in Axialrichtungen gegenüber liegenden Nocken ausgebildet sein. Bei radialem Rastgliedeingriff dagegen empfiehlt es sich, daß die Nocken und die Stellkurve an einem drehfest und axial unverschiebbar am Futterkörper befestigten Zwischenring ausgebildet sind, an dem der Stellring gelagert ist.

Im übrigen kann es zweckmäßig sein, daß die Flankenflächen der Rastausnehmungen in der einen Drehrichtung des Stellrings steiler als in der anderen Drehrichtung sind. Die zum Ausrasten erforderlichen Kräfte und Momente sind dann in Abhängigkeit von der Drehrichtung unterschiedlich groß. Insbesondere empfiehlt es sich dabei, daß der Rastkopf in der dem Nachspannen des Bohrfutters entsprechenden Drehrichtung des Stellrings den steileren Flankenflächen anliegt.

Im folgenden wird die Erfindung an in der Zeichnung dargestellten Ausführungsbeispielen näher erläutert; es zeigen:
- Fig. 1: ein Bohrfutter nach der Erfindung in einem Axialschnitt gemäß I - I in Fig. 2,
- Fig. 2: den Querschnitt in Richtung II - II durch das Bohrfutter nach Fig. 1,
- Fig. 3: den Querschnitt III - III durch das Bohrfutter nach Fig. 1,
- Fig. 4: das in Fig. 3 mit IV gekennzeichnete Detail in vergrößerter Darstellung,
- Fig. 5: den Axialschnitt V - V in Fig. 2,
- Fig. 6: das in Fig. 2 mit VI gekennzeichnete Detail in vergrößerter Darstellung,
- Fig. 7: eine andere Ausführungsform des Bohrfutters nach der Erfindung in einer der Fig. 2 entsprechenden Darstellung,
- Fig. 8: eine weitere Ausführungsform eines erfindungsgemäßen Bohrfutters in einer den Fig. 2 und 7 entsprechenden Darstellung,
- Fig. 9: eine weitere Ausführungsform eines erfindungsgemäßen Bohrfutters in einem Axialschnitt,
- Fig. 10: den Schnitt X - X durch das Bohrfutter nach Fig. 9,
- Fig. 11: einen in Fig. 9 durch die Pfeile XI - XI angedeuteten Längsschnitt in einer Abwicklung in Umfangsrichtung des Bohrfutters.
- Fig. 12: eine weitere Ausführungsform des Bohrfutters nach der Erfindung in einem Axialschnitt, teils in Seitenansicht,
- Fig. 13: den Schnitt XIII - XIII in Fig. 12 und
- Fig. 14: den Schnitt XIV - XIV in Fig. 12.
- Fig. 15: eine weitere Ausführungsform des erfindungsgemäßen Bohrfutters in einer der Fig. 12 entsprechenden Darstellung,
- Fig. 16: den Schnitt XVI - XVI in Fig. 15 und
- Fig. 17: den Schnitt XVII - XVII in Fig. 15.

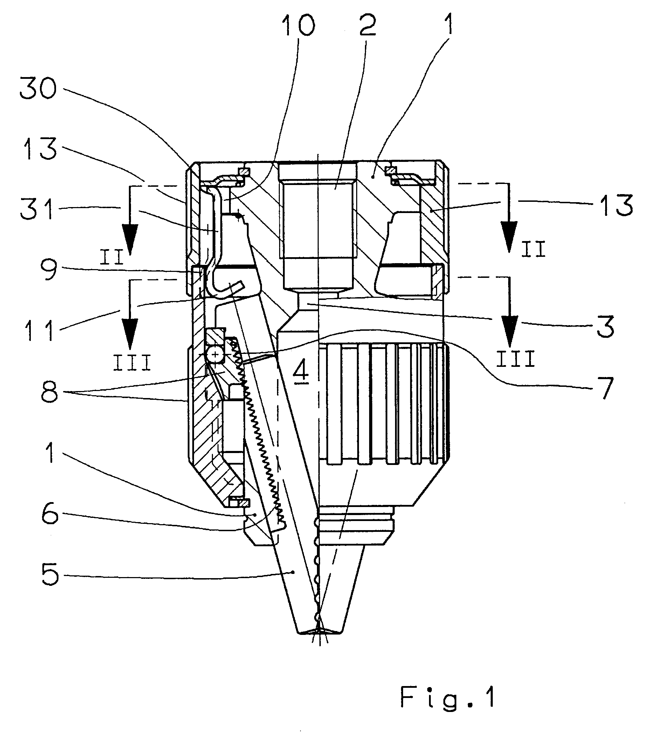

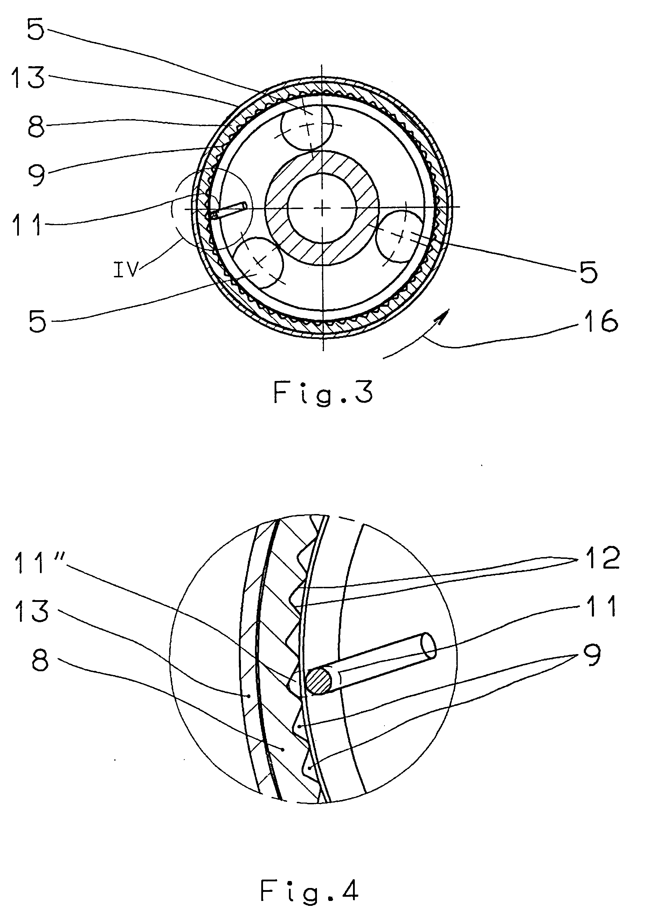

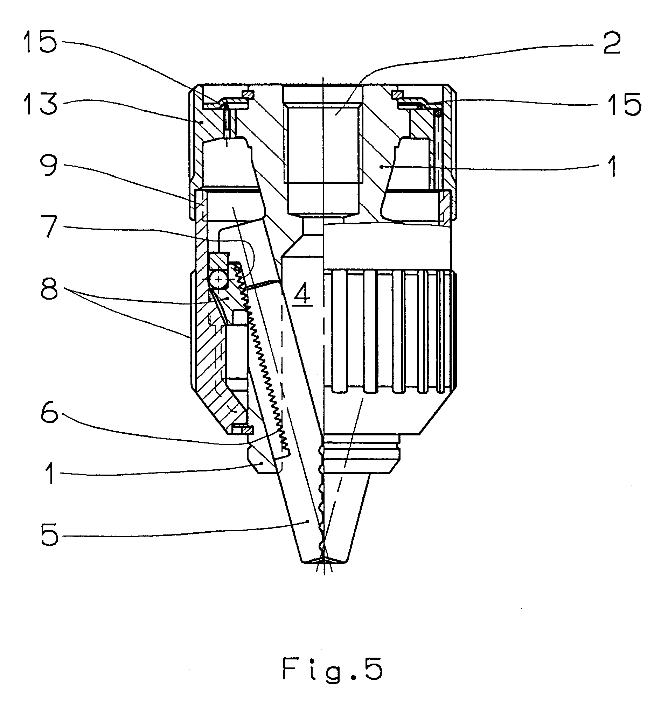

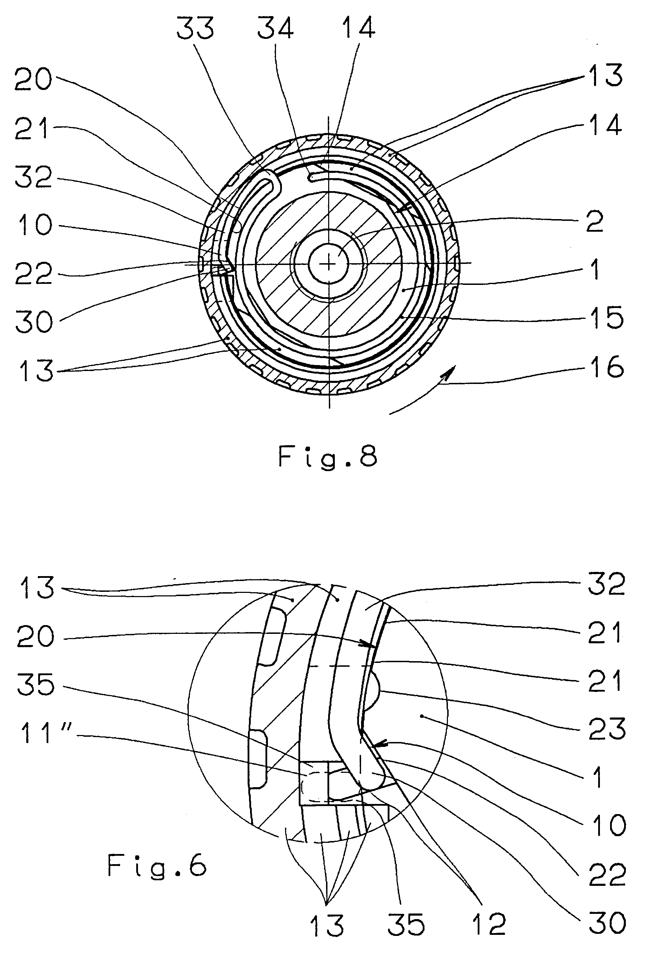

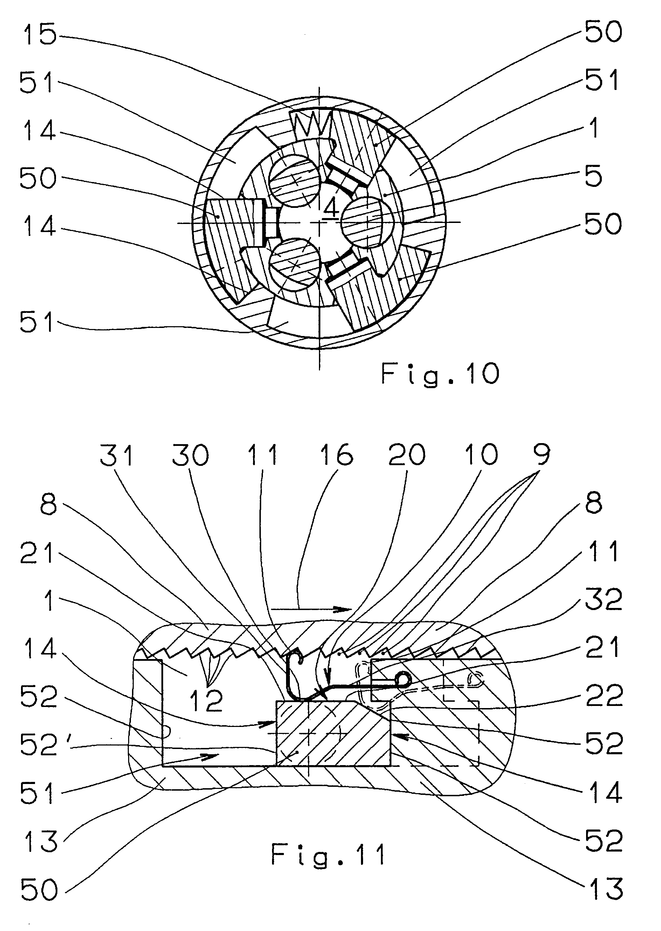

Die in der Zeichnung dargestellten Bohrfutter dienen zur Aufnahme eines nicht dargestellten Bohrers und besitzen je einen Futterkörper 1 zum Anschluß an eine zur Ausübung von Schlägen auf den Bohrer eingerichteten, ebenfalls nicht dargestellten Bohrspindel. Zum Anschluß der Bohrspindel besitzt der Futterkörper 1 eine Gewindeaufnahme 2, an die sich nach vorn ein axialer Durchgang 3 anschließen kann, durch den hindurch die Schläge eines in der hohlen Drehspindel verschiebbar geführten Schlägers oder Döppers unmittelbar auf das Schaftende des in der Werkzeugaufnahme 4 des Bohrfutters gehaltenen Bohrers übertragen werden können. Die Bohrfutter besitzen den Bohrer zentrierende, axial führende und/oder einspannende Spannbacken 5, die in der zur Futterachse koaxialen Werkzeugaufnahme 4 zentrisch zur Futterachse verstellbar sind. Die Spannbacken 5 greifen mit einer Verzahnung 6 in eine Innenverzahnung 7 eines Spannrings 8, der am Futterkörper 1 axial unverschiebbar und drehbar geführt ist und zum Spannen und Lösen des Futters von Hand verdreht werden kann. Um unerwünschte Verstellungen der Spannbacken 5 zu verhindern, kann die Drehstellung des Spannrings 8 fixiert werden. Dazu dient eine zwischen dem Futterkörper 1 und dem Spannring 8 wirksame Rasteinrichtung, die aus einem zur Futterachse koaxialen Kranz von Rastausnehmungen 9 auf Seiten des Spannrings 8 und aus mindestens einem Rastglied 10 besteht, das einen federnd in die Rastausnehmungen 9 greifenden Rastkopf 11 trägt. Der Rastkopf 11 und die ihn aufnehmenden Rastausnehmungen 9 liegen in Drehrichtung des Spannrings 8 einander in derart geneigten Flankenflächen 12 an, daß diese Flankenflächen 12 beim Verdrehen des Spannrings 8 von Hand den Rastkopf 11 aus den Rastausnehmungen 9 herausdrücken, so daß der Rastkopf 11 von Rastausnehmung zu Rastausnehmung 9 verrutschen kann, im übrigen aber im Bohrbetrieb der Rastkopf 11 durch die Flankenflächen 12 in der jeweiligen Rastausnehmung 9 gehalten wird. Das Rastglied 10 ist an einem Stellring 13 angeordnet, der koaxial am Futterkörper 1 drehbar gelagert und in seinem Drehweg zwischen zwei Anschlägen 14 begrenzt ist. Zwischen dem Stellring 13 und dem Futterkörper 1 ist eine Nachstellfeder 15 angeordnet, die in gespanntem Zustand den Stellring 13 in Bezug auf den Futterkörper 1 in derselben Drehrichtung (Pfeil 16) wie die des Spannrings 8 beim Spannen des Bohrfutters beaufschlagt. Die Kraft der Nachstellfeder 15 reicht aber nicht aus, den Rastkopf 11 aus den Rastausnehmungen 9 über die Flankenflächen 12 herauszudrücken. Graben sich aber im Bohrbetrieb die Spannbacken in den Bohrerschaft ein, stellt die Nachstellfeder 15 den Spannring 8 und damit die Spannbacken 5 entsprechend nach, so daß die betriebssichere Einspannung des Bohrwerkzeugs erhalten bleibt. Durch Verdrehen des Stellrings 13 in dieser Richtung (Pfeil 16) bis zum Anschlag 14 kann das Rastglied 10 zum Ende des Drehwegs hin in einen Zustand verstellt werden, in dem der Rastkopf 11 ohne Möglichkeit zum Rasteingriff außerhalb der Rastausnehmungen 9 steht, wie dies aus in Fig. 1 bis 8 dargestellt und in Fig. 11, 12 und 14 bei 11' gestrichelt angedeutet ist. Dagegen ist die dem Rasteingriff entsprechende Stellung des Rastkopfs 11 in den Fig. 4 und 6 bei 11'' gestrichelt, in Fig. 11, 12, 14 und 15 ausgezogen gezeichnet.

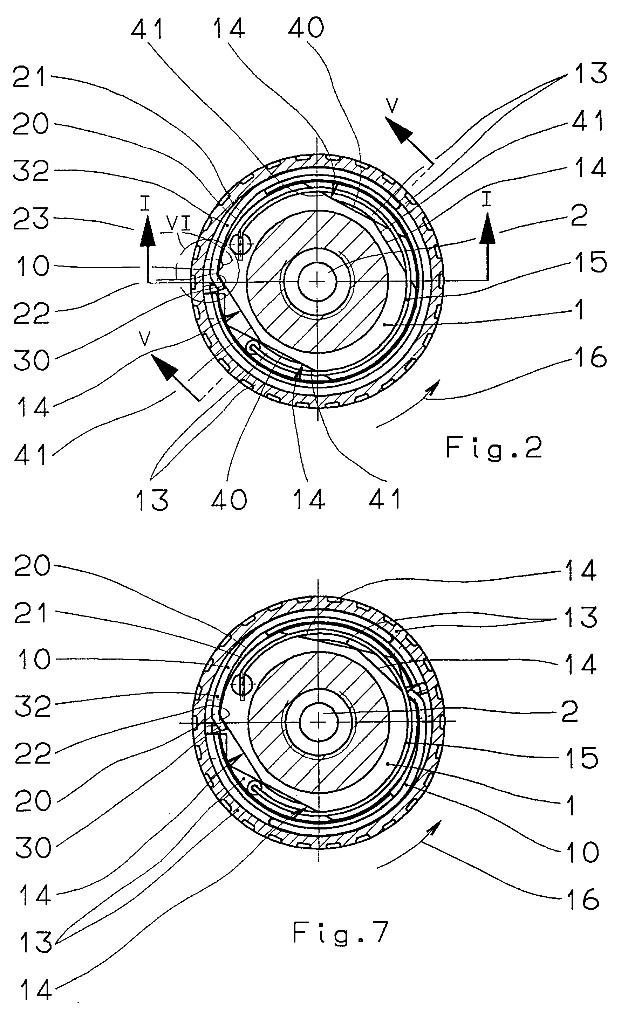

In allen Ausführungsformen sind der Spannring 8 und der Stellring 13 am Futterkörper 1 axial nebeneinander angeordnet und überdecken gemeinsam den Futterkörper 1 im wesentlichen seiner ganzen axialen Länge nach, so daß der Futterkörper 1 selbst keine Handhabe zum Fassen und Halten des Bohrfutters von Hand bietet. Beim Spannen oder Lösen des Bohrfutters muß daher das Bohrfutter am Stellring 13 festgehalten und relativ zum Stellring 13 der Spannring 8 verdreht werden. Geschieht dies in der dem Spannen des Bohrfutters entsprechenden, durch den Pfeil 16 angedeuteten Drehrichtung, wird der Futterkörper 1 durch Reibung, spätestens aber dann, wenn die Spannbacken 5 am Bohrerschaft zur Anlage kommen, in derselben Drehrichtung vom Spannring 8 relativ zum Stellring 13 mitgenommen, so daß sich auch der Futterkörper 1 in Richtung des Pfeiles 16 gegenüber dem festgehaltenen Stellring 13 verdreht, bis der Futterkörper 1 und der Stellring 13 in dieser Drehrichtung über die Anschläge 14 aneinander zur Anlage kommen. Von da an wird der Futterkörper 1 durch den festgehaltenen Stellring 13 am weiteren Mitdrehen in Richtung des Pfeils 16 gehindert, so daß nun durch weiteres Verdrehen nur noch des Spannrings 8 das Bohrfutter in gewünschter Weise gespannt werden kann. Bei der beschriebenen anfänglichen Mitdrehung des Futterkörpers 1 gegenüber dem Stellring 13 wird die Nachstellfeder 15 gespannt. Ist der Spannvorgang beendet, werden also der Stellring 13 und der Spannring 8 losgelassen, können sie sich infolge des Eingriffs des Rastkopfes 11 in den Rastausnehmungen 9 nicht gegeneinander selbsttätig verdrehen, so daß die Nachstellfeder 15 den Stellring 13 und mit ihm den Spannring 8 relativ zum Futterkörper 1 in Richtung des Pfeiles 16 nachstellen kann, wenn sich während des Bohrbetriebs zwischen dem Bohrerschaft und den Spannbacken 5 ein loses Spiel ergeben sollte, weil sich die Spannbacken in den Bohrerschaft eindrücken oder eingraben. Die Einspannung des Bohrerschafts zwischen den Spannbacken 5 wird daher durch die Nachstellfeder 15 stets aufrecht erhalten. - Das Lösen des Futters erfolgt in umgekehrter Weise. Bei festgehaltenem Stellring 13 wird der Spannring 8 entgegen dem Pfeil 16 verdreht, wobei wiederum der Futterkörper 1 in dieser Drehrichtung zunächst mitgenommen wird, bis der Futterkörper 1 und der Stellring 13 in den Anschlägen 14 aneinander zur Anlage kommen und dadurch der Futterkörper 1 durch den Stellring 13 am Weiterdrehen gehindert wird. Gleichzeitig wird dabei das Rastglied 10 so gesteuert, daß es zum Ende dieses Drehweges hin aus dem Rasteingriff in den Rastausnehmungen 9 austritt und den Spannring 8 zur unbehinderten Verdrehung in der einen oder anderen Richtung zur unbehinderten Verdrehung freigibt. Diese Steuerung des Rastglieds 10 wird dadurch erreicht, daß das Rastglied 10 dem Futterkörper 1 in einer Stellkurve 20 anliegt, die beim Verdrehen des Stellrings 13 das Rastglied 10 zwischen seinen beiden Zuständen mit und ohne Eingriff des Rastkopfes 11 in die Rastausnehmungen 9 verstellt. Dabei besitzt die Stellkurve 20 zum Eingriff des Rastkopfes 11 in die Rastausnehmung 9 einen sich über den größeren Teil des insgesamt zur Verfügung stehenden Drehweges des Stellrings 13 erstreckenden Kurvenabschnitt 21 mit im wesentlichen gleich bleibendem Abstand vom Kranz der Rastausnehmungen 9, so daß das Rastglied 10 bei seiner Bewegung längs dieses Kurvenabschnitts 21 in seiner Raststellung gehalten wird und über die Flankenflächen 12 von Rastausnehmung 9 zu Rastausnehmung 9 rutscht. An diesen Kurvenabschnitt 21 schließt sich für den eingriffsfreien Zustand des Rastgliedes 10 eine schräge Rampe 22 mit zum Drehwegende hin größer werdendem Abstand vom Kranz der Rastausnehmungen 9 an, mit dem Ergebnis, daß bei einer Verdrehung des Stellrings 13 in eine Lage, in der das Rastglied 10 von der Rampe 22 gesteuert wird, der Rastkopf 11 aus den Rastausnehmungen 9 austritt. Die Stellkurve 20 kann an dem an die Rampe 22 anschließenden Ende des Kurvenabschnitts 21 einen nur in Fig. 2 und 6 dargestellten Rastsitz 23 bilden, der das Rastglied 10 in Verdrehungsrichtung des Stellrings 13 hält und dadurch verhindert, daß das Rastglied 10 unbeabsichtigt und selbsttätig von dem Kurvenabschnitt 21 auf die Rampe 22 abgleitet.

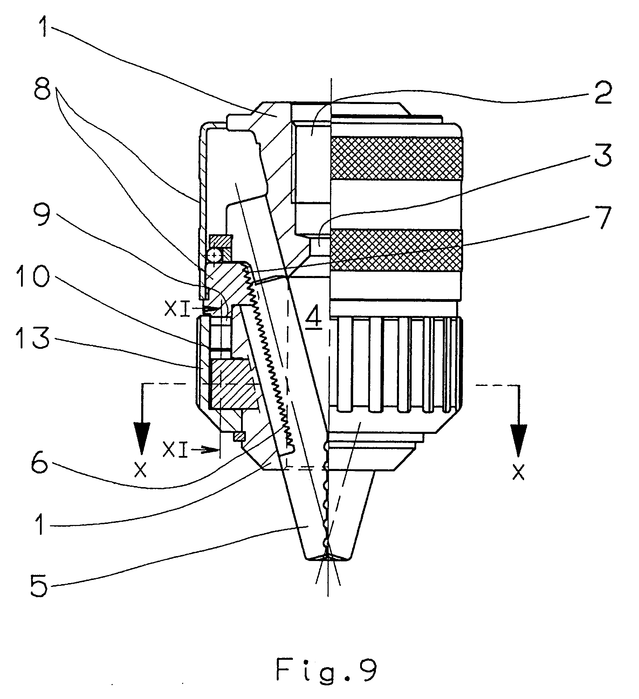

Das Rastglied 10 ist in den Fig. 1 bis 11 von einer Feder mit zwei in einem Federknie 30 gegeneinander abgewinkelten Federschenkeln 31, 32 gebildet, wobei in den Fig. 1 bis 8 die Feder als Federdraht, in den Fig. 9 bis 11 als Federband ausgebildet ist. Am jeweils vom Federknie 30 wegliegenden Schenkelende ist der eine, sich im wesentlichen axial erstreckende Federschenkel 31 mit dem Rastkopf 11 versehen und, mit Ausnahme der Fig. 8, der andere, sich im wesentlichen in Umfangsrichtung erstreckende Federschenkel 32 am Stellring 13 angeschlossen, während das Federknie 30 an der Stellkurve 20 geführt ist. Die Federwirkung des Federschenkels 31 liefert die für den Rasteingriff des Rastkopfes 11 erforderliche Federkraft, die es dem Rastkopf 11 auch ermöglicht, über die Flankenflächen 12 entlang dem Spannring 8 von Rastausnehmung 9 zu Rastausnehmung 9 zu rutschen. Der andere Federschenkel 32 dagegen liefert eine Federvorspannung, unter der das Federknie 30 an der Stellkurve 20 anliegt. Diese Federvorspannung ist im Ausführungsbeispiel nach den Fig. 1 bis 8 radial nach innen, im Ausführungsbeispiel nach den Fig. 9 bis 11 axial nach vorn und damit in allen Fällen vom Kranz der Rastausnehmungen 9 weggerichtet, so daß die Federvorspannung den Rastkopf 11 aus seinem Eingriff in die Rastausnehmungen 9 herausbewegt, wenn das Federknie 30 an der Rampe 22 abläuft.

Die Fig. 8 zeigt den Fall, daß für das Rastglied 10 und die Nachstellfeder 15 nur ein einziges Federelement Verwendung findet. Hier ist der Federschenkel 32 unmittelbar in einer Haarnadelbiegung 33 mit einem Ende einer die Nachstellfeder 15 bildenden Spiralfeder verbunden, deren anderes Ende 34 am Futterkörper 1 gehalten ist. Damit die Nachstellfeder 15 zwischen dem Futterkörper 1 und dem Stellring 13 wirksam werden kann, ist das Federknie 30 am Stellring 13 in einer Führungsausnehmung 35 in Umfangsrichtung abgestützt, in der radialen Eingriffsrichtung des Rastkopfes 11 in die Rastausnehmungen 9 aber verschiebbar geführt.

Außer in Fig. 7 ist in den Ausführungsbeispielen nach den Fig. 1 bis 11 nur ein einziges Rastglied 10 vorgesehen. Im Ausführungsbeispiel nach Fig. 7 dagegen sind zwei Rastglieder 10 vorhanden, die längs des Futterumfangs verteilt angeordnet und jedes für sich in der schon anhand der Fig. 1 bis 6 beschriebenen Art ausgebildet sind. Diese Verteilung über den Umfang kann so erfolgen, daß beide Rastglieder 10 gleichzeitig mit ihrem Rastkopf 11 jeweils in eine der Rastausnehmungen 9 eingreifen. Die Rastglieder 10 können aber auch in Umfangsrichtung geringfügig gegeneinander versetzt sein, so daß jeweils nur eines der Rastglieder 10 in eine Rastausnehmung 9 eingreift, während das zweite Rastglied mit seinem Rastkopf 11 zwischen zwei Rastausnehmungen 9 steht. Es ergibt sich auf diese Weise eine feinere Rastunterteilung ohne entsprechende Verfeinerung der Winkelteilung der Rastausnehmungen 9.

Im übrigen ist in den Fig. 1 bis 8 die Anordnung so getroffen, daß der Rastkopf 11 in der Richtung radial von innen nach außen in die Rastausnehmungen 9 eingreift. Er kann in diesem Fall mit einem in der Zeichnung nicht dargestellten Fliehgewicht ausgestattet sein, das während des Bohrvorgangs durch seine Zentrifugalkraft den Rastkopf 11 zusätzlich radial nach außen in die Rastausnehmungen 9 drückt.

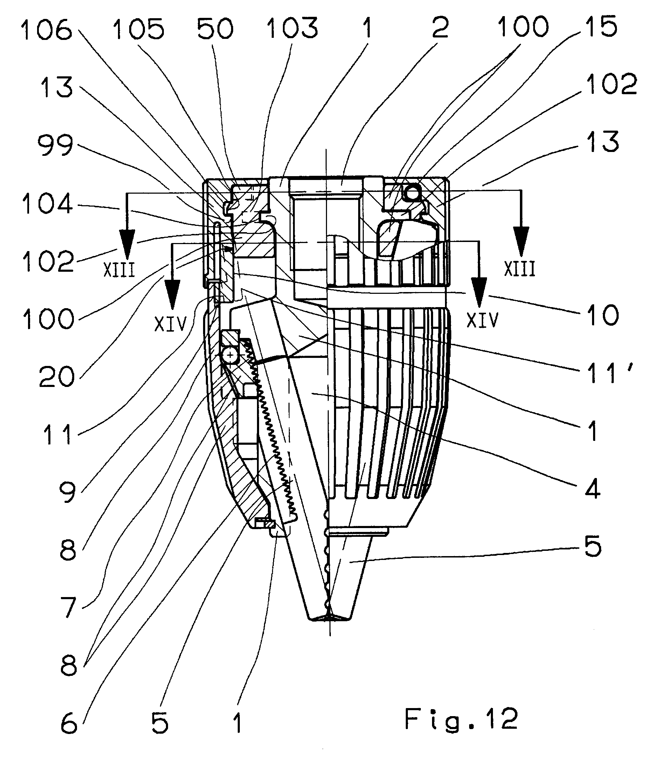

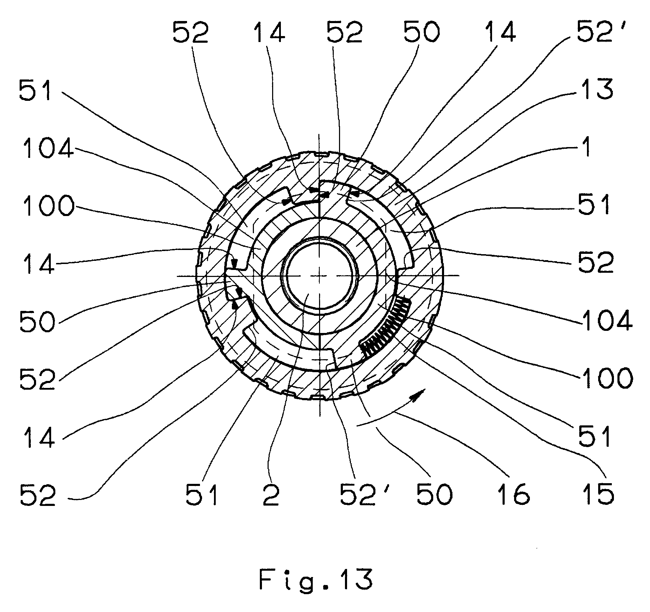

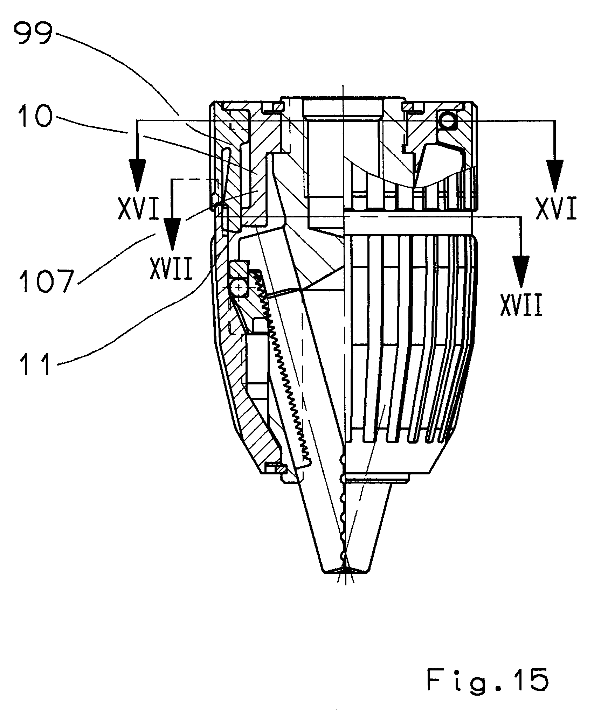

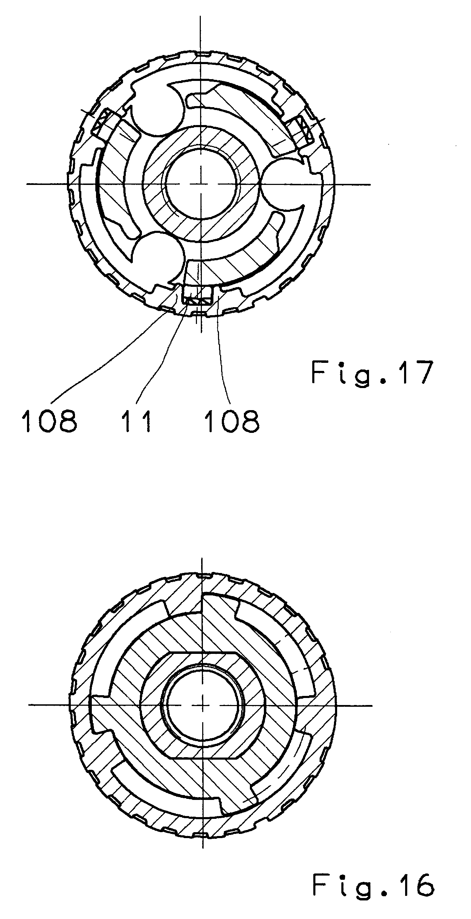

In den Figuren 12 bis 17 sind die Rastglieder 10 zu dritt gleichmäßig über den Futterumfang verteilt und jeweils von einem sich in Axialrichtung des Bohrfutters erstreckenden Stab gebildet, der sich in radialer Richtung federnd durchbiegen kann und vergleichbar mit dem Federschenkel 31 in Fig. 1 ist. Der Stab ist jeweils einstückig mit dem Stellring 13 ausgebildet und mit ihm nur am einen Stabende bei 99 in Fig. 12, 15 verbunden. Das andere, freie Stabende trägt den Rastkopf 11 zum radialen Eingriff in die Rastausnehmungen 9. Zwischen seinen beiden Enden liegt der Stab mit federnder Vorspannung an der Stellkurve 20 an, wobei auch hier wie schon im Fall des Federschenkels 31 die Federvorspannung entgegengesetzt zur Eingriffsrichtung des Rastkopfes 11 in die Rastausnehmungen 9, also radial einwärts gerichtet ist, so daß sich der Rastkopf 11 unter der Wirkung der Vorspannung an der Rampe 22 aus den Rastausnehmungen 9 heraushebt. Im übrigen liefert vor allem die elastische Biegespannung im Stab die Rastkraft, die bei am Teil 21 der Stellkurve 20 abgestütztem Stab aufgebracht werden muß, um den Rastkopf 11 über die Flankenflächen 12 von Rastausnehmung zu Rastausnehmung 9 rutschen zu lassen. Diese Rastkraft ist offensichtlich um so größer, je näher am Rastkopf 11 der Stab gegen die Stellkurve 20 abgestützt ist, wodurch die Größe der Rastkraft auf einfache Weise konstruktiv beeinflußt werden kann.

Die Anschläge 14, welche die Verdrehung des Stellrings 13 gegenüber dem Futterkörper 1 begrenzen, sind im Ausführungsbeispiel nach den Fig. 1 bis 8 durch zwei sich am Stellring 13 diametral gegenüber liegende, achsenparallele Planflächen 40 gebildet. Jeder dieser Planflächen 40 stehen am Futterkörper 1 zwei achsenparallele und zueinander schräge Anschlagflächen 41 gegenüber, die durch ihre gegenseitige Schrägstellung den Winkel bestimmen, um den der Stellring 13 gegenüber dem Futterkörper 1 maximal verdrehbar ist.

In den Ausführungsbeispielen nach den Fig. 9 bis 17 dagegen ist zur Bildung dieser Anschläge 14 der Futterkörper 1 mit radial abstehenden Nocken 50 versehen, die in im Stellring 13 ausgebildete Taschen 51 greifen, welche in Umfangsrichtung um den Verdrehungsweg größer als die Nockenabmessungen sind. In diesen Taschen 51 ist die Nachstellfeder 15 angeordnet. Die Anschläge 14 für die Drehbegrenzung des Stellrings 13 sind von den sich in Umfangsrichtung jeweils gegenüber liegenden Flächen 52, 52' der Nocken 50 bzw. Taschen 51 gebildet.

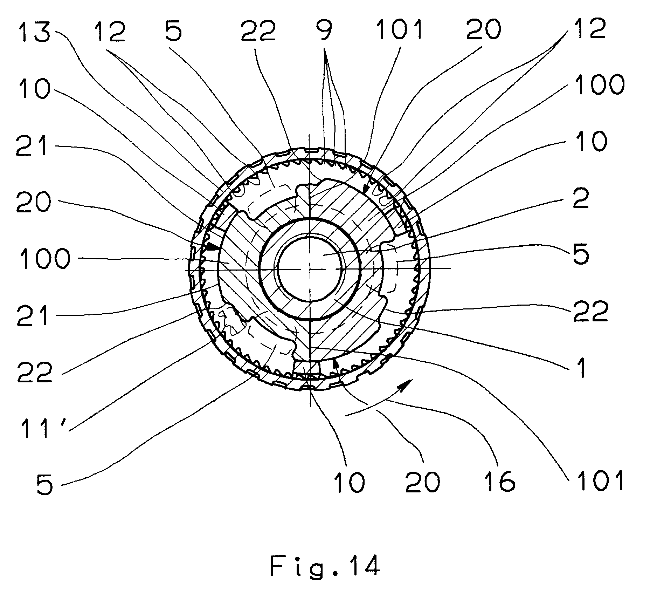

Im Ausführungsbeispiel nach den Fig. 9 bis 11 ist auch das Rastglied 10 in einer der Taschen 15 angeordnet. Die Stellkurve 20 für das Rastglied 10 ist an dem ihm in Axialrichtung gegenüber liegenden Nocken 50 ausgebildet. Im Ausführungsbeispiel nach den Fig. 12 bis 17 sind dagegen die Nocken 50 und die Stellkurve 20 an einem Zwischenring 100 ausgebildet, der drehfest und axial unverschiebbar am Futterkörper 1 befestigt ist. Dazu kann der Zwischenring in Umfangsrichtung bei 101 in Fig. 14 zweigeteilt und jedes Teil von der Seite her an den Futterkörper 1 angesteckt sein, so daß ein am Futterkörper 1 vorgesehener Radialflansch 102 in eine Ringnut 103 des Zwischenrings 100 greift und damit den Zwischenring 100 axial festlegt. Der Radialflansch 102 ist am Umfangsrand mit Abflachungen 104 versehen, denen entsprechende Abflachungen im Boden der Ringnut 103 anliegen, was den Zwischenring 100 gegen Verdrehen relativ zum Futterkörper 1 sichert. Die beiden Hälften des Zwischenrings 100 werden vom Stellring 13 zusammengehalten, der den Zwischenring 100 umgibt und an ihm gelagert ist. Der Stellring 13 ist am Zwischenring 100 durch eine an letzterem vorgesehene Ringwulst 105 gehalten, die bei der Montage des Bohrfutters in eine Ringnut 106 des Stellrings 13 eingerastet wird. In den Fig. 15 bis 17 dagegen ist der Zwischenring 100 in Umfangsrichtung einteilig ausgebildet und axial auf den Futterkörper 1 aufgeschoben, an dem er undrehbar und axial unverschiebbar gehalten ist. Die Stellkurven 20 sind längs des axial vorderen Randes von Wandteilen 107 des Zwischenrings 100 ausgebildet, die sich axial vorkragend und in Umfangsrichtung bogenförmig am Zwischenring 100 erstrecken. Die Wandteile 107 sind radial federnd verformbar und drücken durch ihre Federkraft den Rastkopf 11 über die Stellkurve 20 zusätzlich in die Rastausnehmungen 9. Damit die aus der Wand des Stellrings 13 freigeschnittenen Rastglieder 10 in Umfangsrichtung möglichst unnachgiebig sind, können sie, wie in den Fig. 15 bis 17, in Umfangsrichtung beidseits an am Stellring 13 ausgebildeten Widerlagern 108 abgestützt sein.

In allen Ausführungsbeispielen sind im übrigen die Flankenflächen 12 der Rastausnehmungen 9 in der einen Drehrichtung des Stehrings 13 steiler als in der anderen, wobei der Rastkopf 11 in der dem Nachspannen des Bohrfutters entsprechenden, durch den Pfeil 16 angegebenen Drehrichtung den steileren Flankenflächen 12 anliegt.

## Patentansprüche

1. Bohrfutter, insbes. zum Schlag- und Hammerbohren, mit einem Futterkörper (1), einem daran verdrehbaren koaxialen Spannring (8), mit Spannbacken (5), die zum Spannen und Lösen des Bohrfutters durch eine Relativdrehung zwischen dem Spannring (8) und dem Futterkörper (1) verstellbar sind, und mit einer zwischen dem Futterkörper (1) und dem Spannring (8) wirksamen Rasteinrichtung aus einem zur Futterachse koaxialen Kranz von Rastausnehmungen (9) auf Seiten des Spannrings (8) und aus mindestens einem Rastglied (10), das einen federnd in die Rastausnehmungen (9) greifenden Rastkopf (11) trägt, wobei der Rastkopf (11) und die ihn aufnehmenden Rastausnehmungen (9) in Drehrichtung des Spannrings (8) einander in derart geneigten Flankenflächen (12) anliegen, daß diese beim Verdrehen des Spannrings (8) von Hand oder mittels eines Spannschlüssels den Rastkopf (11) aus den Rastausnehmungen (9) herausdrücken, im übrigen aber den Rastkopf (11) in den Rastausnehmungen (9) halten, dadurch gekennzeichnet, daß das Rastglied (10) an einem Stellring (13) angeordnet ist, der koaxial am Futterkörper (1) drehbar gelagert und relativ zum Futterkörper (1) in seinem Drehweg zwischen zwei Anschlägen (14) begrenzt ist, daß eine zwischen dem Stellring (13) und dem Futterkörper (1) wirksame Nachstellfeder (15) den Stellring (13) in Bezug auf den Futterkörper (1) in derselben Drehrichtung wie die des Spannrings (8) beim Spannen des Bohrfutters beaufschlagt, wobei die Kraft der Nachstellfeder (15) nicht ausreicht, den Rastkopf (11) aus den Rastausnehmungen (9) herauszudrücken, und daß durch Verdrehen des Stellrings (13) in dieser Richtung bis zum Anschlag (14) hin das Rastglied (10) in einen Zustand verstellbar ist, in dem der Rastkopf (11) ohne Möglichkeit zum Rasteingriff außerhalb der Rastausnehmungen (9) steht.

2. Bohrfutter nach Anspruch 1, dadurch gekennzeichnet, daß der Spannring (8) und der Stellring (13) axial nebeneinander am Futterkörper (1) angeordnet sind und gemeinsam den Futterkörper (1) im wesentlichen seiner ganzen axialen Länge nach überdecken.

3. Bohrfutter nach Anspruch 1 oder 2, dadurch gekennzeichnet, daß das Rastglied (10) an einer relativ zum Futterkörper (1) festen Stellkurve (20) geführt ist, die beim Verdrehen des Stellrings (13) das Rastglied (10) zwischen seinen beiden Zuständen mit und ohne Eingriff des Rastkopfes (11) in die Rastausnehmungen (9) verstellt, wobei die Stellkurve (20) zum Eingriff des Rastkopfes (11) in die Rastausnehmungen (9) einen vom Kranz der Rastausnehmungen (9) im wesentlichen gleichbleibenden Abstand aufweisenden Kurvenabschnitt (21) und daran anschließend für den eingriffsfreien Zustand eine schräge Rampe (22) mit zum Drehwegende hin größer werdendem Abstand besitzt.

4. Bohrfutter nach Anspruch 3, dadurch gekennzeichnet, daß die Stellkurve (20) an dem an die Rampe (22) anschließenden Ende des zum Eingriff des Rastkopfes (11) in die Rastausnehmungen (9) vorgesehenen Kurvenabschnitts (21) einen das Rastglied (10) in Verdrehungsrichtung des Stellrings (13) haltenden Rastsitz (23) bildet.

5. Bohrfutter nach Anspruch 3 oder 4, dadurch gekennzeichnet, daß das Rastglied (10) von einer Feder mit zwei in einem Knie (30) gegeneinander abgewinkelten Federschenkeln (31, 32) gebildet ist, von welchen sich der eine (31) im wesentlichen in Umfangsrichtung des Bohrfutters erstreckt, und daß der axial gerichtete Federschenkel (31) an dem vom Federknie (30) wegliegenden Schenkelende den Rastkopf (11) aufweist und mit dem Federknie (30) an der Stellkurve (20) geführt ist.

6. Bohrfutter nach Anspruch 5, dadurch gekennzeichnet, daß das Federknie (30) der Stellkurve (20) unter einer Federvorspannung des sich im wesentlichen in Umfangsrichtung erstreckenden Federschenkels (32) anliegt, wobei die Federvorspannung entgegen gesetzt zur Eingriffsrichtung des Rastkopfes (11) in die Rastausnehmungen (9) gerichtet ist.

7. Bohrfutter nach Anspruch 6, dadurch gekennzeichnet, daß das Federknie (30) am Stellring (13) gegen Verstellungen in Umfangsrichtung abgestützt ist und in Eingriffsrichtung des Rastkopfes (11) in die Rastausnehmungen (9) verschiebbar geführt ist.

8. Bohrfutter nach Anspruch 7, dadurch gekennzeichnet, daß der sich im wesentlichen in Umfangsrichtung erstreckende Federschenkel (32) an seinem dem Federknie (30) abgewandten Ende mit dem einen Ende einer die Nachstellfeder (15) bildenden Spiralfeder verbunden ist, deren anderes Ende (34) am Futterkörper (1) gehalten ist.

9. Bohrfutter nach Anspruch 3 oder 4, dadurch gekennzeichnet, daß das Rastglied (10) von einem sich im wesentlichen in Axialrichtung des Bohrfutters erstreckenden, in radialer Richtung elastisch biegbaren Stab gebildet ist, der mit dem einen Ende am Stellring (13) sitzt und am anderen, freien Ende den Rastkopf (11) zum radialen Eingriff in die Rastausnehmungen (9) trägt und dazwischen mit federnder Vorspannung an der Stellkurve (20) anliegt, wobei die Federvorspannung entgegengesetzt zur Eingriffsrichtung des Rastkopfes (11) in die Rastausnehmungen (9) gerichtet ist.

10. Bohrfutter nach Anspruch 9, dadurch gekennzeichnet, daß der das Rastglied (10) bildende Stab einstückig mit dem Stellring (13) ausgebildet ist.

11. Bohrfutter nach einem der Ansprüche 1 bis 10, dadurch gekennzeichnet, daß mehrere Rastglieder (10) vorgesehen und verteilt über den Futterumfang angeordnet sind.

12. Bohrfutter nach Anspruch 11, dadurch gekennzeichnet, daß zumindest zwei Rastglieder (10) längs des Futterumfangs in einer Winkelteilung angeordnet sind, bei der der Winkel zwischen diesen Rastgliedern (10) gleich der Summe aus einem ganzzahligen Vielfachen des Winkelabstands zwischen aufeinander folgenden Rastausnehmungen (9) und einem Differenzwinkel ist, der gleich dem letztgenannten Winkelabstand geteilt durch die Anzahl der Rastglieder (10) ist.

13. Bohrfutter nach einem der Ansprüche 1 bis 12, dadurch gekennzeichnet, daß der Rastkopf (11) radial von innen nach außen in die Rastausnehmungen (9) eingreift.

14. Bohrfutter nach einem der Ansprüche 1 bis 13, dadurch gekennzeichnet, daß zur Ausbildung der die Verdrehung des Stellrings (13) gegenüber dem Futterkörper (1) begrenzenden Anschläge (14) eines der Teile, Futterkörper (1) oder Stellring (13), mindestens eine achsenparallele Planfläche (40) aufweist, der am anderen Teil zwei achsenparallele und zueinander schräge Anschlagflächen (41) gegenüber stehen, die durch ihre gegenseitige Schrägstellung den Winkel bestimmen, um den der Stellring (13) gegenüber dem Futterkörper (1) maximal verdrehbar ist.

15. Bohrfutter nach einem der Ansprüche 1 bis 3, dadurch gekennzeichnet, daß der Futterkörper (1) mit radial abstehenden Nocken (50) versehen ist, die in im Stellring (13) ausgebildete Taschen (51) greifen, die in Umfangsrichtung um den Verdrehungsweg größer als die Nocken (50) sind und in denen die Nachstellfeder (15) angeordnet ist, wobei die Anschläge (14) zur Drehbegrenzung des Stellrings (13) von den sich in Umfangsrichtung jeweils gegenüber liegenden Flächen (52, 52) der Nocken (50) bzw. Taschen (51) gebildet sind.

16. Bohrfutter nach Anspruch 15, dadurch gekennzeichnet, daß das Rastglied (10) in einer der Taschen (51) angeordnet und die Stellkurve (20) für das Rastglied (10) an dem ihm in Axialrichtung gegenüber liegenden Nocken (50) ausgebildet ist.

17. Bohrfutter nach Anspruch 15, dadurch gekennzeichnet, daß die Nocken (50) und die Stellkurve (20) an einem drehfest und axial unverschiebbar am Futterkörper (1) befestigten Zwischenring (100) ausgebildet sind, an dem der Stellring (13) gelagert ist.

18. Bohrfutter nach Anspruch 17, dadurch gekennzeichnet, daß die Stellkurve (20) am axial vorderen, d. h. den Spannbacken (5) zugewandten Rand eines sich axial nach vorn und in Umfangsrichtung bogenförmig erstreckenden Wandteils (107) des Zwischenrings (100) ausgebildet ist, wobei der Wandteil (107) radial federnd verformbar ist und über die Stellkurve (20) den Rastkopf (11) zusätzlich federnd in die Rastausnehmungen (9) drückt.

19. Bohrfutter nach Anspruch 17 oder 18, dadurch gekennzeichnet, daß der Zwischenring (100) in Umfangsrichtung zweigeteilt und von dem ihn umschließenden Stellring (13) zusammengehalten ist.

20. Bohrfutter nach einem der Ansprüche 1 bis 19, dadurch gekennzeichnet, daß die Flankenflächen (12) der Rastausnehmungen (9) in der einen Drehrichtung des Stellrings (13) steiler als in der anderen Drehrichtung sind.

21. Bohrfutter nach Anspruch 20, dadurch gekennzeichnet, daß der Rastkopf (11) in der dem Nachspannen des Bohrfutters entsprechenden Drehrichtung des Stellrings (13) den steileren Flankenflächen (12) anliegt.

## Claims

1. A drilling chuck, in particular for impact and hammer drilling, having a chuck body (1), a coaxial clamping ring (8) rotatable thereon, having clamping jaws (5) which are displaceable for tightening and releasing the drilling chuck by a relative rotary movement between the clamping ring (8) and the chuck body (1), and having a detent means which is operative between the chuck body (1) and the clamping ring (8) and which comprises a ring, which is coaxial with the chuck axis, of detent openings (9) on the part of the clamping ring (8) and at least one detent member (10) carrying a detent head (11) which resiliently engages into the detent openings (9), wherein the detent head (11) and the detent openings (9) receiving same bear against each other, in the direction of rotation of the clamping ring (8), at flank surfaces (12) which are inclined in such a way that when the clamping ring (8) is rotated by hand or by means of a tightening key the flank surfaces urge the detent head (11) out of the detent openings (9) but otherwise hold the detent head (11) in the detent openings (9), characterised in that the detent member (10) is arranged on an adjusting ring (13) which is rotatably mounted coaxially on the chuck body (1) and which is limited in its rotational movement relative to the chuck body (1) between two abutments (14), that a take-up adjusting spring (15) operative between the adjusting ring (13) and the chuck body (1) acts on the adjusting ring (13) in relation to the chuck body (1) in the same direction of rotation as that of the clamping ring (8) when tightening the drilling chuck, wherein the force of the take-up adjusting spring (15) is not sufficient to urge the detent head (11) out of the detent openings (9), and that by rotation of the adjusting ring (13) in that direction as far as the abutment (14) the detent member (10) can be displaced into a condition in which the detent head (11) is disposed without any possibility of detent engagement outside the detent openings (9).

2. A drilling chuck according to claim 1 characterised in that the clamping ring (8) and the adjusting ring (13) are arranged in axially side-by-side relationship on the chuck body (1) and jointly cover over the chuck body (1) substantially along the entire axial length thereof.

3. A drilling chuck according to claim 1 or claim 2 characterised in that the detent member (10) is guided at an adjusting cam means (20) which is fixed relative to the chuck body (1) and which upon rotation of the adjusting ring (13) displaces the detent member (10) between its two conditions with and without engagement of the detent head (11) into the detent openings (9), wherein for engagement of the detent head (11) into the detent openings (9) the adjusting cam means has a cam portion (21) which is at a substantially uniform spacing from the ring of the detent openings (9), and adjoining same for the engagement-free condition an inclined ramp (22) at a spacing which increases towards the end of the rotary movement.

4. A drilling chuck according to claim 3 characterised in that at the end, adjoining the ramp (22), of the cam portion (21) which is provided for engagement of the detent head (11) into the detent openings (9) the adjusting cam means (20) forms a detent seat (23) for holding the detent member (10) in the direction of rotary movement of the adjusting ring (13).

5. A drilling chuck according to claim 3 or claim 4 characterised in that the detent member (10) is formed by a spring having two spring limbs (31, 32) which are angled relative to each other at an elbow bend (30) and of which the one (31) extends substantially in the peripheral direction of the drilling chuck, and that the axially directed spring limb (31) has the detent head (11) at the limb end which is remote from the spring elbow bend (30) and is guided with the spring elbow bend (30) on the adjusting cam means (20).

6. A drilling chuck according to claim 5 characterised in that the spring elbow bend (30) bears against the adjusting cam means (20) under a spring bias of the spring limb (32) which extends substantially in the peripheral direction, wherein the spring bias is directed in the opposite direction to the direction of engagement of the detent head (11) into the detent openings (9).

7. A drilling chuck according to claim 6 characterised in that the spring elbow bend (30) is supported against the adjusting ring (13) to resist displacements in the peripheral direction and is guided displaceably in the direction of engagement of the detent head (11) into the detent openings (9).

8. A drilling chuck according to claim 7 characterised in that at its end remote from the spring elbow bend (30) the spring limb (32) which extends substantially in the peripheral direction is connected to the one end of a coil spring which forms the take-up adjusting spring (15) and whose other end (34) is held on the chuck body (1).

9. A drilling chuck according to claim 3 or claim 4 characterised in that the detent member (10) is formed by a bar which extends substantially in the axial direction of the drilling chuck and which is elastically bendable in the radial direction and which is carried with the one end on the adjusting ring (13) and at the other free end carries the detent head (11) for radial engagement into the detent openings (9) and therebetween bears with resilient bias against the adjusting cam means (20), wherein the spring bias is directed in opposite relationship to the direction of engagement of the detent head (11) into the detent openings (9).

10. A drilling chuck according to claim 9 characterised in that the bar forming the detent member (10) is formed in one piece with the adjusting ring (13).

11. A drilling chuck according to one of claims 1 to 10 characterised in that there are provided a plurality of detent members (10) which are arranged distributed around the chuck periphery.

12. A drilling chuck according to claim 11 characterised in that at least two detent members (10) are arranged along the chuck periphery in an angular distribution in which the angle between said detent members (10) is equal to the sun of an integral multiple of the angular spacing between successive detent openings (9) and a difference angle which is equal to the last-mentioned angular spacing divided by the number of' detent members (10).

13. A drilling chuck according to one of claims 1 to 12 characterised in that the detent head (11) engages radially from the inside outwardly into the detent openings (9).

14. A drilling chuck according to one of claims 1 to 13 characterised in that to form the abutments (14) for limiting the rotary movement of the adjusting ring (13) relative to the chuck body (1) one of the parts, chuck body (1) or adjusting ring (13), has at least one planar surface (40) which is parallel to the axis and disposed opposite which on the other part are two abutment surfaces (41) which are parallel to the axis and inclined relative to each other and which by virtue of their mutual inclined positioning determine the angle through which the adjusting ring (13) is rotatable at a maximum relative to the chuck body (1).

15. A drilling chuck according to one of claims 1 to 3 characterised in that the chuck body (1) is provided with radially projecting dogs (50) which engage into pockets (51) which are provided in the adjusting ring (13) and which in the peripheral direction are larger by the rotational travel than the dogs (50) and in which the take-up adjusting spring (15) is arranged, wherein the abutments (14) for limiting the rotary movement of the adjusting ring (13) are formed by surfaces (52, 52) of the dogs (50) and pockets (51) respectively, which surfaces are respectively disposed in opposite relationship in the peripheral direction.

16. A drilling chuck according to claim 15 characterised in that the detent member (10) is arranged in one of the pockets (51) and the adjusting cam means (20) for the detent member (10) is provided on the dog (50) which is disposed in opposite relationship thereto in the axial direction.

17. A drilling chuck according to claim 15 characterised in that the dogs (50) and the adjusting cam means (20) are provided on an intermediate ring (100) which is non-rotatably and axially immovably feed to the chuck body (1) and on which the adjusting ring (13) is mounted.

18. A drilling chuck according to claim 17 characterised in that the adjusting cam means (20) is provided at the edge, which is the axially front edge, that is to say towards the clamping jaws (5), of a wall portion (107) of the intermediate ring (100) which extends axially forwardly and arcuately in the peripheral direction, wherein the wall portion (107) is radially resiliently deformable and by way of the adjusting cam means (20) additionally resiliently urges the detent head (11) into the detent openings (9).

19. A drilling chuck according to claim 17 or claim 18 characterised in that the intermediate ring (100) is divided into two in the peripheral direction and is held together by the adjusting ring (13) which embraces it.

20. A drilling chuck according to one of claims 1 to 19 characterised in that the flank surfaces (12) of the detent openings (9) are steeper in the one direction of rotation of the adjusting ring (13) than in the other direction of rotation.

21. A drilling chuck according to claim 20 characterised in that the detent head (11) bears against the steeper flank surfaces (12) in the direction of rotation of the adjusting ring (13), which corresponds to take-up tightening of the drilling chuck.

## Revendications

1. Mandrin de perçage, notamment pour le perçage percutant et le perçage à chocs, comportant un corps de mandrin (1), une bague de serrage coaxiale (8) pouvant tourner sur ce corps, des mâchoires de serrage (5), qui peuvent être déplacées au moyen d'une rotation relative entre la bague de serrage (8) et le corps (1) du mandrin, pour le serrage et le desserrage du mandrin de perçage, et un dispositif d'encliquetage, actif entre le corps (1) du mandrin et la bague de serrage (8) et constitué par une couronne, qui est coaxiale à l'axe du mandrin, d'évidements d'encliquetage (9) aménagés dans la bague de serrage (8) et par au moins un organe d'encliquetage (10), qui porte une tête d'encliquetage (11) pouvant s'engager élastiquement dans les évidements d'encliquetage (9), la tête d'encliquetage (11) s'appliquant contre les évidements d'encliquetage (9), qui reçoivent cette tête, dans le sens de rotation de la bague de serrage (8), au niveau de surfaces inclinées (12) de flancs de telle sorte que lors de la rotation de la bague de serrage (8) exécutée manuellement ou à l'aide d'une clé de serrage, ces surfaces repoussent la tête d'encliquetage (11) hors des évidements d'encliquetage (9), mais par ailleurs retiennent la tête d'encliquetage (11) dans ces évidements d'encliquetage (9), caractérisé en ce que l'organe d'encliquetage (10) est disposé sur une bague de réglage (13), qui est montée de manière à pouvoir tourner coaxialement sur le corps (1) du mandrin et est limitée dans son mouvement de rotation, par rapport au corps (1) du mandrin, entre deux butées (14), qu'un ressort de rattrapage de jeu (15) agissant entre la bague de réglage (13) et le corps (1) du mandrin, charge la bague de réglage (13) par rapport au corps (1) du mandrin dans le même sens de rotation que celui de la bague de serrage (8) lors du serrage du corps du mandrin de perçage, la force du ressort de rattrapage de jeu (15) n'étant pas suffisante pour repousser la tête d'encliquetage (11) hors des évidements d'encliquetage (9), et que, sous l'effet de la rotation de la bague de réglage (13) dans cette direction jusqu'à la butée (14), l'organe d'encliquetage (10) peut être placé dans un état, dans lequel la tête d'encliquetage (11) est située à l'extérieur des évidements d'encliquetage (9), sans possibilité d'encliquetage.

2. Mandrin de perçage selon la revendication 1, caractérisé en ce que la bague de serrage (8) et la bague de réglage (13) sont disposées axialement côte-à-côte sur le corps (1) du mandrin et recouvrent conjointement le corps (1) du mandrin essentiellement sur toute sa longueur axiale.

3. Corps de mandrin selon la revendication 1 ou 2, caractérisé en ce que l'organe d'encliquetage (10) est guidé sur une came de réglage (20), qui est fixe par rapport au corps (1) du mandrin et qui, lors de la rotation de la bague de réglage (13), amène l'organe d'encliquetage (10) dans les évidements d'encliquetage (9), entre ses deux états avec et sans engrènement de la tête d'encliquetage (11), la came de commande (20) possédant, pour l'engrènement de la tête d'encliquetage (11) dans les évidements d'encliquetage (9) une section de came (21), qui est située à une distance essentiellement constante de la couronne des évidements d'encliquetage (9), et possède, à la suite de ces sections, pour l'état non engrené, une rampe oblique (22) située à une distance par rapport à la couronne des évidements, qui augmente jusqu'à l'extrémité de la course de rotation.

4. Mandrin de perçage selon la revendication 3, caractérisé en ce que la came de réglage (20) possède, sur l'extrémité, qui se raccorde à la rampe (22), de la section de came (21) prévue pour l'engagement de la tête d'encliquetage (11) dans les évidements d'encliquetage (9), un siège d'encliquetage (23) qui retient l'organe d'encliquetage (10) dans le sens de rotation de la bague de réglage (13).

5. Mandrin de perçage selon la revendication 3 ou 4, caractérisé en se que l'organe d'encliquetage (10) est formé par un ressort comportant deux branches (31,32) qui sont repliées l'une vers l'autre pour former un coude (30) et dont l'une (31) s'étend essentiellement dans la direction circonférentielle du mandrin de perçage, et que la branche (31) du ressort, qui est dirigée axialement, possède la tête d'encliquetage (11) sur son extrémité éloignée du coude (30) et est guidée, avec le coude (30), contre la came de réglage (20).

6. Mandrin de perçage selon la revendication 5, caractérisé en ce que le coude (30) du ressort s'applique contre la came de réglage (20) sous l'action d'une précontrainte de la branche (32) du ressort, qui s'étend essentiellement dans la direction circonférentielle, la précontrainte du ressort étant dirigée à l'encontre de la direction d'action de la tête d'encliquetage (11) dans les évidements (9).

7. Mandrin de perçage selon la revendication 6, caractérisé en ce que le coude (30) du ressort est supporté par la bague de réglage (13) à l'encontre de déplacements dans la direction circonférentielle et est guidé, dans la direction d'engrènement de la tête d'encliquetage (11) de manière à être amené dans les évidements d'encliquetage (9).

8. Mandrin de perçage selon la revendication 7, caractérisé en ce que la branche (32) du ressort, qui s'étend essentiellement dans la direction circonférentielle, est reliée, au niveau de son extrémité située à l'opposé du coude (30) du ressort, à une extrémité d'un ressort spiral de rattrapage de jeu (15), dont l'autre extrémité (34) est retenue sur le corps (1) du mandrin.

9. Mandrin de perçage selon la revendication 3 ou 4, caractérisé en ce que l'organe d'encliquetage (10) est formé par une tige qui s'étend essentiellement dans la direction axiale du mandrin de perçage, est flexible élastiquement dans la direction radiale et prend appui par une extrémité contre la bague de réglage (13) et porte, au niveau de son outre extrémité libre, la tête d'encliquetage (11) pour qu'elle s'engage radialement dans les évidements d'encliquetage (9), et s'applique, entre ces évidements, au moyen d'une précontrainte élastique contre la came de commande (20), la précontrainte du ressort étant dirigée en sens opposé de la direction d'engrènement de la tête d'encliquetage (11) dans les évidements d'encliquetage (9).

10. Mandrin de perçage selon la revendication 9, caractérisé en ce que la tige, qui forme l'organe d'encliquetage (10), est formée d'un seul tenant avec la bague de réglage (13).

11. Perçage selon l'une des revendications 1 à 10, caractérisé en ce que plusieurs organes d'encliquetage (10) sont prévus et sont disposés d'une manière répartie sur la périphérie du mandrin.

12. Mandrin de perçage selon la revendication 11, caractérisé en ce qu'au moins deux organes d'encliquetage (10) sont disposés le long de la périphérie du mandrin, selon un pas angulaire tel que l'angle entre ces organes d'encliquetage (10) est égal à la somme d'un multiple entier de la distance angulaire entre des évidements d'encliquetage successifs (9), et d'un angle différentiel, qui est égal à la distance angulaire indiquée en dernier lieu, divisée par le nombre des organes d'encliquetage (10).

13. Mandrin selon l'une quelconque des revendications 1 à 12, caractérisé en ce que la tête d'encliquetage (11) s'engage radialement de l'intérieur vers l'extérieur dans les évidements d'encliquetage (9).

14. Mandrin de perçage selon l'une des revendications 1 à 13, caractérisé en ce que pour la formation des butées (14), qui limitent la rotation de la bague de réglage (13) par rapport au corps (1) du mandrin, l'une des parties formées par le corps (1) du mandrin et la bague de réglage (16) possède au moins une surface plane (40) parallèle à l'axe, contre laquelle s'appliquent deux surfaces de butée (41) qui sont parallèles à l'axe et obliques l'une par rapport à l'autre sur l'autre partie et qui, grâce à leur position oblique réciproque, déterminent l'angle dont la bague de réglage (13) peut tourner au maximum par rapport au corps (1) du mandrin.

15. Mandrin de perçage selon l'une des revendications 1 à 3, caractérisé en ce que le corps (1) du mandrin est équipé d'organes saillants (50) qui font saillie radialement et qui s'engagent dans des logements (51) formés dans la bague de réglage (13) et qui ont une taille comptée dans la direction circonférentielle, qui est augmentée de la course de rotation, par rapport aux organes saillants (50) et dans lesquels est disposé le ressort de rattrapage de jeu (15), les butées (14) étant formées de manière à limiter la rotation de la bague de réglage (13) à partir des surfaces (52,52) qui sont situées respectivement en vis-à-vis dans la direction circonférentielle, des organes saillants (50) et des logements (51).

16. Mandrin de perçage selon la revendication 15, caractérisé en ce que l'organe d'encliquetage (10) est disposé dans l'un des logements (51) et que la came de réglage (20) pour l'organe d'encliquetage (10) est formée sur la came (50) qui est située en vis-à-vis de cet organe d'encliquetage, dans la direction axiale.

17. Mandrin de perçage selon la revendication 15, caractérisé en ce que les organes saillants (50) et la came de réglage (20) sont formés sur une bague intermédiaire (1) fixée avec blocage en rotation et sans possibilité de déplacement axial sur le corps (100) du mandrin et sur laquelle est montée la bague de réglage (13).

18. Mandrin de perçage selon la revendication 17, caractérisé en ce que la came de réglage (20) eut formée, sur le bord avant dans le sens axial, c'est-à-dire tourné vers les mâchoires de serrage (5), d'un élément de paroi (107) de la bague intercalaire (100), qui s'étend axialement vers l'avant et en forme d'arc de cercle dans la direction circonférentielle, l'élément de paroi (107) pouvant être déformé élastiquement radialement et repoussant en outre élastiquement, au moyen de la came de réglage (20), la tête d'encliquetage (11) dans les évidements d'encliquetage (9).

19. Mandrin de perçage selon la revendication 17 ou 18, caractérisé en ce que la bague intercalaire (100) est divisée en deux dans la direction circonférentielle et est maintenue assemblée par la bague de réglage (13) qui l'entoure.

20. Mandrin de perçage selon l'une des revendications 1 à 19, caractérisé en ce que les surfaces (12) des flancs des évidements d'encliquetage (9) sont plus pentues dans un sens de rotation de la bague de réglage (13) que dans l'autre.

21. Mandrin de serrage selon la revendication 20, caractérisé en ce que la tête d'encliquetage (11) s'applique contre les surfaces plus pentues (12) des flancs, dans le sens de rotation de la bague de réglage (13), qui correspond au resserrage du mandrin de perçage.
